Europäisches Patentamt

European Patent Office

Office européen des brevets

(19)

(11) Publication number: **0 041 352**

**A1**

(12) **EUROPEAN PATENT APPLICATION**

(21) Application number: **81302302.5**

(22) Date of filing: **26.05.81**

(51) Int. Cl.³: **F 24 D 3/00**

(30) Priority: 27.05.80 GB 8017268
25.07.80 GB 8024491
13.02.81 GB 8104576
10.03.81 GB 8107481

(43) Date of publication of application:
09.12.81 Bulletin 81/49

(84) Designated Contracting States:
AT BE CH DE FR GB IT LI LU NL SE

(71) Applicant: THERMOTROPIC LIMITED
North Leverton
Retford Nottinghamshire DN22 0AJ(GB)

(72) Inventor: Harris, Kenneth John
Woodlands Magpie Lane
North Leverton, Retford Nottinghamshire(GB)

(74) Representative: Stephens, Michael John
M.J. Stephens & Co. Royal Building 11 St. Andrew's
Cross
Plymouth Devon PL1 2DS(GB)

(54) Heating system utilising a heat pump.

(57) A heating system such as a central heating system utilises as its heat source a heat pump which upgrade the heat of the return water flow from the radiators (1). A proportion of the return flow passes through a tank (5) containing the evaporator (14) of the heat pump and then enters a main tank (7) containing the compressor (19) and condenser (10) of the heat pump. Alternatively, the evaporator (13) may be located in the bottom of the main tank (7), surrounding the compressor housing (9).

FIG.1.

EP 0 041 352 A1

- 1 -

## DESCRIPTION

This invention relates to a heating system utilising a heat pump.

The object of the present invention is to provide a system utilising a heat pump as a source of heat for a heating system, for example a central heating system.

It is known to employ heat pumps in liquid heating systems, for example, domestic hot water systems, for the purpose of extracting low grade heat and upgrading the heat to a higher temperature for use in heating the water or other liquid. The low grade heat source in some known systems comprises a solar panel, a waste heat recovery unit, or an ambient temperature source.

The present invention seeks to provide a heat pump in conjunction with a liquid heating system, in which the source of low grade heat for the heat pump is self-contained, forming part of the heating water system itself.

According to the present invention there is provided a heating system in which liquid returning from a heat-dissipating circulatory system is utilised as a source of low-grade heat for a heat pump which upgrades the heat and heats liquid for return to the circulatory system.

In one embodiment of the invention the heat pump has heat dissipating and heat absorbing elements which are located in a common heat exchange tank through which the liquid to be heated is circulated. The heat pump preferably includes a compressor located in a lower part of the tank, a heat-dissipating condenser located in an upper part of the tank, and a heat-absorbing evaporator located in the lower part of the tank.

Where the evaporator is located in the lower part of a common heat exchange tank it also serves to cool the compressor, ensuring that the refrigerant gas entering the compressor is relatively cool and has a higher density than would otherwise be the case, thereby increasing the volumetric efficiency of the compressor. Furthermore, the cooling of the compressor in this way also cools the windings of the compressor motor, lowering their electrical resistance and increasing the motor efficiency. Stratification of liquid at different temperatures occurs, with cold liquid gravitating to the bottom of the tank and hot liquid rising to the top of the tank, from which it is withdrawn in use of the system.

A refrigerant liquid receiver may be located in the lower part of the tank, communicating with the lower end of the condenser. The liquid receiver is preferably connected via an expansion device such as a valve or capillary tube to the inlet end of the evaporator, completing the refrigerant circuit of the heat pump.

In an alternative embodiment of the invention the system includes a heat exchange tank housing a condenser and a compressor, and a liquid cooling tank connected to a return liquid flow line of the water heating system leading to the heat exchange tank, said
cooling tank housing an evaporator, the condenser,
compressor and evaporator forming part of the heat pump
so that in operation the evaporator extracts heat from
the return liquid flow and the compressor and condenser
give up heat to water circulated through the heat
exchange tank.

The evaporator of the heat pump absorbs relatively
low-grade heat at the temperature of the liquid return
flow line. The return flow of liquid which enters the
heat exchange tank from the cooling tank is effectively
pre-cooled by heat exchange with the evaporator. The
return flow line preferably includes a by-pass duct
which leads directly to the heat exchange tank,
by-passing the cooling tank. Typically, the flow rate
through the cooling tank would be 150 litres per
hour where the main flow rate through the heat exchange
tank is 1000 litres per hour. In a preferred embodiment
of the invention the by pass duct includes an
adjustable flow restrictor for restricting the by
pass liquid flow relative to the flow of liquid
over the evaporator.

In a further alternative embodiment of the invention
the evaporator is arranged to receive heat from a
liquid return flow in a hot liquid circulation system,
so that the refrigerant vapour leaving the evaporator
is super-heated before entering the compressor, which is preferably located in the bottom of a liquid heating tank, the condenser being located in an upper part of the tank to heat liquid therein. The cooled return liquid flow, after imparting heat to the evaporator, enters the bottom of said tank to cool the compressor.

In a practical embodiment of the invention as applied to a hot water central heating system, the source of low grade heat is the water leaving the final radiator in the system. To this extent the heat source is self-contained, and there is no need for any external heat collector, such as a solar panel or other ambient heat collector, which, with its associated plumbing, tends to make many existing heat pump hot water systems expensive to make and install.

The invention will be further described, by way of example, with reference to the accompanying drawings, in which:

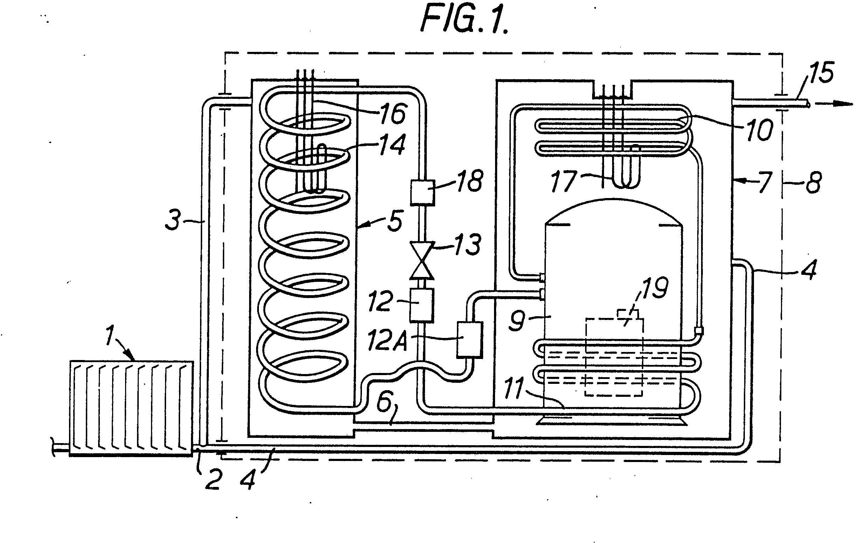

Figure 1 is a schematic diagram illustrating part of a heating system according to a first embodiment of the invention;

Figure 2 is a diagrammatic perspective view, partly cut away, of a heat exchange tank forming part of a heating system according to a second embodiment of the invention, and

Figure 3 is a schematic circuit diagram of a central heating system according to a third embodiment of the invention, incorporating a heat pump with an evaporator installed in a radiator of the system.

- 5 -

The same reference numerals are used throughout the drawings to designate the same or corresponding component parts.

The illustrated heating system is intended for use in the heating of water circulated in a central heating system having radiators 1 , one only of which is shown. It will be appreciated, however, that liquid heating media other than water may be employed. The radiator 1 which is illustrated is in the return flow path of the central heating system. The return flow passes through a return flow pipe 2 which branches into a first return flow pipe 3 and a second return flow pipe 4. The return flow pipe 3 and/or the pipe 4 may may include an adjustable flow restrictor.

The return flow pipe 3 leads to the upper end of a water cooling tank 5 from which a further pipe 6 leads to the bottom of a main heat exchange tank 7. The branch return flow pipe 4 leads to a central part of the heat exchange tank 7. The return flow pipe 4 conducts the greater part of the return water flow to the heat exchange tank 7, by-passing the water cooling tank 5.

The two tanks 5, 7 would be arranged side by side in a common thermally insulated cabinet 8.

A heat pump is used for the heating of water in the heat exchange tank 7. The heat pump includes a compressor 19 sealed within a housing 9 located at or near the bottom of the heat exchange tank 7 and a condenser which is also housed in the heat exchange tank 7. The condenser comprises a coil 10 of relatively small diameter tube which receives the hot refrigerant fluid from the compressor. The condenser coil 10 communicates with a coil 11, of relatively larger diameter tube, which acts as a liquid receiver for the outflow from the condenser coil 10 and which surrounds the compressor housing 9 coaxially. The refrigerant outflow from the receiver coil 11 passes through a filter-drier 12 and an expansion device 13, such as a flow restrictor or capillary tube, located outside the heat exchange tank 7. Cooled refrigerant vapour after passing through the expansion device 13 passes through an evaporator coil 14 immediately downstream of the expansion device 13.

The evaporator coil 14 is housed within the water cooling tank 5 and serves to extract heat from the return water flow passing through the return flow pipe 3. The refrigerant gas leaving the evaporator coil 14 passes through a further filter-drier 12A and enters the compressor 19 through the housing 9, thereby completing the closed refrigerant fluid circuit of the heat pump.

In a typical central heating system the return flow of water entering the heat exchange tank 7 should be cooled to approximately $8^{O}C$ ($46^{O}F$). The flow through the pipe 3 is so regulated that the rate of flow of water through the water cooling tank 5 achieves the desired return flow temperature at the heat exchange tank 7. For example, where the circulation rate in the hot water system is 1000 litres per hour the pipe 3 would typically carry a flow rate of 150 litres per hour, determined by an adjustable flow restrictor.

Hot water outflow for the central heating system is taken from the upper end of the heat exchange tank 7 through an outlet connection 15.

Electrical immersion heaters 16,17 are located in the water cooling tank 5 and the heat exchange tank 7. The heater 16 is thermostatically controlled for the purpose of preventing freezing of water in the tank 5, when the system starts up from cold, before warm water returns to the tank from the last radiator 1 of the system. The heater 17 in the heat exchange tank 7 is for the purpose of boosting the temperature of the water stored in the tank 7 in the event of a sudden heavy demand on the system. The heater 17 is thermostatically controlled to cut in at a temperature just below the normal working temperature of water in the tank 7 (typically $65^{O}C$, $150^{O}F$).

A solenoid valve 18 is located on the low pressure side of the expansion device 13. This valve 18 is closed automatically when the compressor 19 of the heat pump stops, thereby preventing flooding of the evaporator coil 14 with liquid refrigerant, while leaving sufficient regrigerant in the evaporator to equalise at least approximately, the pressure in the system before the compressor 19 starts up again.

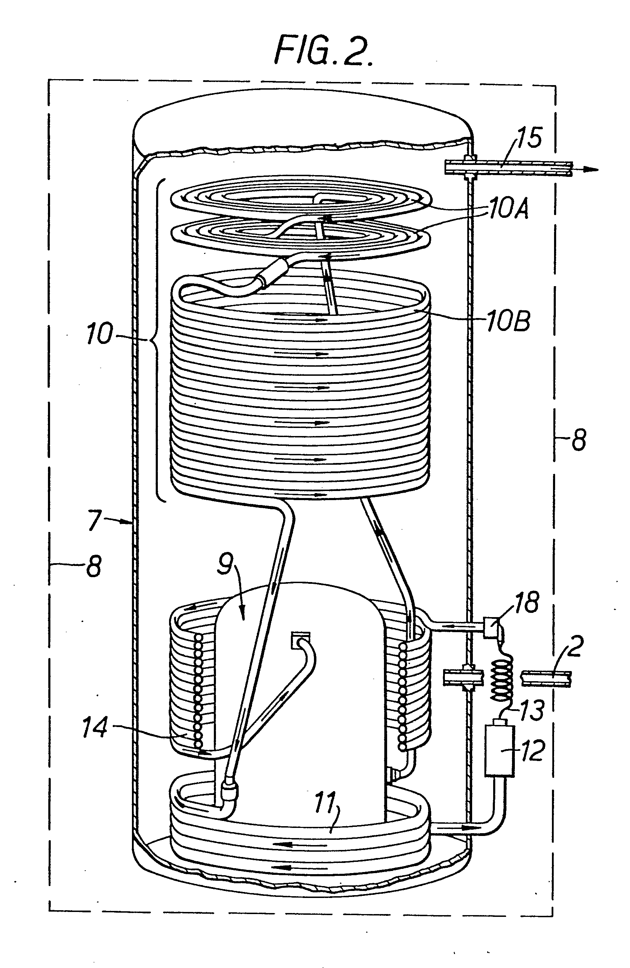

Figure 2 illustrates an alternative embodiment of the invention in which the evaporator coil 14, instead of being housed in a separate tank from the main heat exchange tank 7, is housed in the same tank 7 as the other heat pump components. Thus the return flow of water from the radiators (not shown) enters the tank 7 through a return flow pipe 2 which enters the tank 7 near the bottom thereof.

The compressor of the heat pump is sealed within a housing 9 located at or near the bottom of the heat exchange tank 7 and the condenser 10 is located in the upper part of the heat exchange tank 7. The condenser 10 includes two upper flat coils 10A of corrugated tubing in series and a lower helical coil 10B, of relatively larger diameter tube, which receives the outflow from the upper coils 10A and which is arranged with its axis vertical in the upper part of the tank 7. Refrigerant fluid condensing in the lower coil 10B flows into a liquid receiver coil 11 connected to the lower end of the coil 10B and located in the bottom of the tank 7. The outflow from the receiver coil 11 passes through a drier 12 and an expansion device 13, such as an expansion valve or capillary tube, located outside the heat exchange tank 7, before entering an evaporator coil 14 which coaxially surrounds the compressor housing 9.

The effect of immersing the evaporator coil 14 in the tank 7 is to cool the return water flow entering the tank 7 through the return flow pipe 2 and at the same time to impart heat to the refrigerant fluid in the evaporator coil 14. The refrigerant gas leaving the evaporator coil 14 enters the compressor, thereby completing the closed refrigerant fluid circuit of the heat pump.

Water heated in the tank 7 by the heat dissipating condenser coils 10A and 10B leaves the tank 7 through an outlet pipe 15 at the upper end of the tank 7.

In a typical central heating system the return flow of water entering the heat exchange tank 7 is cooled to approximately $8^{o}C$ ($46^{o}F$) by the evaporator coil 14. The cooling of the compressor ensures that the refrigerant enters the compressor with a relatively high density, so that the compressor operates with high volumetric efficiency.

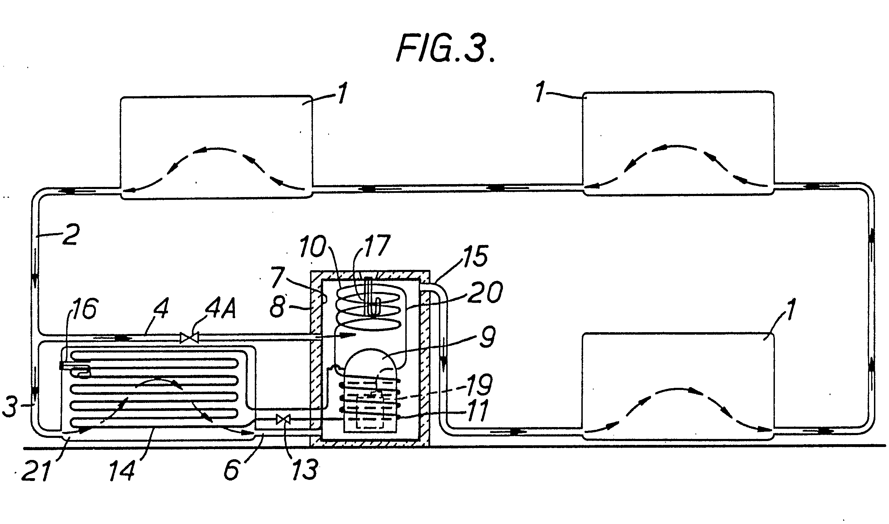

Figure 3 illustrates another embodiment of the invention in which a return flow of hot water, after passing through the radiators 1 of a central heating system, shown diagrammatically, is boosted in temperature as it passes upwards through a water heating tank 7 by a heat pump which draws 'low grade' heat at the temperature of the return water flow of the central heating system, conducted through a return flow pipe 2.

The refrigerant circuit of the heat pump is shown diagrammatically and comprises, in series, an evaporator coil 14, an electric motor-driven compressor 19, a condenser coil 10, a liquid receiver coil 11 and an expansion or throttling device 13. The compressor 19 and its drive motor are contained in a common sealed housing 9 which is located in the bottom of the water heating tank 7. Refrigerant gas from the evaporator coil 14 is compressed in the compressor 17 and the hot compressed gas passes upwardly through a pipe 20 to the condenser coil 10 located within the top of the tank 7. The coil 10 may be equipped with heat dissipating fins.

The refrigerant condenses in the coil 10, giving up its heat to the water in the tank 7. Hot water is drawn from the tank 7 through an outlet 15. The condensed liquid refrigerant flows downwards into the receiver coil 11, the tubing of which is of larger bore than that of the condenser coil 10, coaxially surrounding the compressor housing 9. The cooled refrigerant liquid, still at high pressure, is then expanded through the expansion device 13, which in this example is in the form of a capillary tube, the expansion resulting in vaporisation of the refrigerant, accompanied by a temperature drop. The cold refrigerant enters the evaporator 14, which is in the form of a coil immersed in a water-filled radiator 21 through which some of the return flow of hot water passes via a pipe 3. Some of the heat of this hot water is given up to the refrigerant, which is evaporated and superheated, so that it enters the compressor 19, completing its closed circuit, at a relatively high pressure.

An adjustable proportion of the return flow of water by-passes the radiator 21, passing through a branch pipe 4 containing an adjustable flow restrictor 4A directly into the tank 7.

In a typical installation the temperature of the return water flow from the radiators of the system would be approximately 55°C (130°F). This temperature is reduced as the water flows through the evaporator radiator 21 to about 38°C (100°F). This relatively cool water enters the bottom of the water heating tank 7 and keeps the compressor 19, its drive motor and the receiver coil 11 at a relatively low temperature, for efficient operation thereof, as described above.

Since the "low grade" heat source for the evaporator of the heat pump is at a relatively high temperature, namely that of the returning hot water from the radiators, the refrigerant is superheated in the evaporator coil, so that it leaves the evaporator 14 and enters the compressor 19 at high pressure. In this way the compressor 19 is filled with refrigerant at a relatively high pressure, typically 80-90 psi, so that the compressor 19 can be operated with a lower compression ratio than would otherwise be necessary, with high volumetric efficiency, so that the power consumption of the compressor drive motor is reduced.

Since the refrigerant is superheated in the evaporator 14 the latter is preferably constructed as a two-stage copper coil, consisting of an inner coil of relatively small bore copper tube (typically one half-inch internal diameter) leading into an outer coil of relatively large bore copper tube, typically three quarter-inch internal diameter. In a typical installation the heat imparted to the evaporator radiator 21 by the evaporator coil 14 would be equivalent to about 80 btu per square foot of the radiator surface, for a room temperature of 21$^O$C (70$^O$F)

The superheating of the refrigerant gas in the evaporator radiator 21 leads to a coefficient of performance for the heat pump in excess of 2.5:1. Moreover, this coefficient of performance is substantially unaffected by external ambient temperature, unless the space to be heated has a heat loss greater than the output of the condenser 10. In a typical installation the temperature of the water circulating through the water heating tank 7 would be boosted from 38$^O$C (100$^O$F)
at the inlet to the tank to about 71$^O$C (160$^O$F) at the outlet
from the tank 7. The arrangement of the condenser
coil 10 and the liquid receiver coil 11 at the top and
bottom respectively of the water heating tank 7 ensures
that this high vertical temperature gradient is
maintained within the water heating tank 7.

CLAIMS

1.    A heating system utilising a heat pump to heat a
liquid, characterised in that liquid returning from a
heat-dissipating circulatory system is utilised as a
source of low-grade heat for a heat pump which upgrades
the heat and heats liquid for return to the circulatory
system.

2.    A heating system according to Claim 1, characterised
in that the heat pump has heat dissipating (10) and heat
absorbing (14) elements which are located in a common
heat exchange tank (7) through which the liquid to be
heated is circulated.

3.    A heating system according to Claim 2, characterised
in that the heat pump includes a compressor (19)
located in a lower part of the tank (7), a heat-dissipating
condenser (10) located in an upper part of the tank, and
a heat-absorbing evaporator (14) located in the lower
part of the tank (Fig. 2)

4.    A heating system according to Claim 3, in which
the evaporator comprises a coil (14) surrounding a
housing (9) of the compressor (19).

5.    A heating system according to Claim 3 or Claim 4,
in which a refrigerant liquid receiver (11) is located in
the lower part of the tank (7) and communicates with the
lower end of the condenser (10).

6.    A heating system according to Claim 5, in which the
liquid receiver (11) is connected via an expansion device (13)
located outside the tank to the inlet end of the evaporator (14).

7. A heating system according to any one of claims 2 to 6, in which the heat exchange tank is enclosed in thermally insulating cladding (8).

8. A heating system according to Claim 1, characterised in that a heat exchange tank (7) houses a condenser (10) and a compressor (19) and a liquid cooling tank (5) is connected in a return liquid flow line (2) of the heating system leading to the heat exchange tank, said cooling tank housing an evaporator (14), and in that the condenser (10), compressor (19) and evaporator (14) form part of the heat pump so that in operation the evaporator extracts heat from the return liquid flow and the compressor and condenser give up heat to water circulated through the heat exchange tank.

9. A heating system according to Claim 8, in which the return flow line (2) includes a by-pass duct (4) which leads directly to the heat exchange tank (7), by-passing the cooling tank (5).

10. A heating system according to Claim 9, in which the return flow line (2) to the by-pass duct (4) includes a flow restrictor (4A) for restricting the return liquid flow to the water cooling tank relative to the flow of liquid to the by-pass duct.

11. A heating system according to any of Claims 8 to 10, characterised in that the condenser (10) includes a first coil (10A) in the upper part of the heat exchange tank (7) and a second coil (10B) in a lower part of said tank.

12.   A heating system according to Claim 11, in which the cooling tank (5) has a return flow connection to a central part of the heat exchange tank (7), between said upper and lower parts thereof.

13.   A heating system according to Claim 1, in which the heat pump includes an evaporator (14), compressor (19), condenser (10)  and throttling device (13) arranged in a closed refrigerant circuit, characterised in that the evaporator (14) is arranged to receive heat from a return liquid flow of the circulatory system, the refrigerant vapour leaving the evaporator being superheated before entering the compressor (19), which is located in the bottom of a heat exchange tank (7), the condenser (10) of the heat pump being located in an upper part of the tank to heat liquid therein, and characterised in that the cooled return flow of liquid, after imparting heat to the evaporator, enters the bottom of said tank to cool the  compressor. (Fig.3)

14.   A heating system according to Claim 13, including a liquid receiver (11) arranged to receive liquid refrigerant from the condenser (10) before the refrigerant enters the throttling device (13), the liquid receiver being located at the bottom of the heat exchange tank (7).

15.   A heating system according to Claim 14, in which the liquid receiver comprises a coil (11) surrounding the compressor housing (9) in the bottom of the said heat exchange tank (7).

16. A heating system according to any one of Claims 13 to 15, in which the evaporator (14) comprises a coil, having an upstream portion of smaller bore than its downstream portion, housed in a radiator unit (21) through which a return flow of liquid passes before entering the bottom of the heat exchange tank (7).

FIG.1.

FIG.2.

FIG.3.

0041352

European Patent Office

**EUROPEAN SEARCH REPORT**

Application number

EP 81 30 2302

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | F 24 D 3/00 |
| X | <u>FR - A - 2 280 039</u> (ALSTHOM)<br><br>* claim 1; figures *<br><br>-- | 1 | |
| | <u>US - A - 2 462 557</u> (SANTEE)<br><br>* column 2, lines 23-34; figure 1 *<br><br>-- | 1 | |
| | <u>DE - B - 1 102 187</u> (HEAT PUMP & <u>REFRIGERATION LTD.</u>)<br><br>* column 2, lines 36-44; figures *<br><br>-- | 4 | TECHNICAL FIELDS SEARCHED (Int. Cl.³)<br><br>F 24 D |
| E | <u>WO - A - 81/01738</u> (BAUER)<br><br>* page 1, line 1 - page 2, line 32; figure 1 *<br><br>-- | 1 | |
| A | <u>BE - A - 846 494</u> (JEURISSEN)<br><br>* claims 1,2 *<br><br>----- | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27-08-1981 | VAN GESTEL |

EPO Form 1503.1 06.78